# EUROPÄISCHE PATENTSCHRIFT

(11) **EP 4 272 470 B1**
(45) Veröffentlichungstag und Bekanntmachung des Hinweises auf die Patenterteilung: **09.10.2024**
(21) Anmeldenummer: 21758679.1
(22) Anmeldetag: 11.08.2021
(51) Int. Cl.: H04W 4/80, H02J 50/10, H04W 76/15, H04W 76/14, H04W 12/10, H04B 5/00, H04B 5/72, H04W 84/18, H04B 5/24, H04W 12/06

(54) **VERFAHREN UND DATENTRÄGER ZUR ÜBERTRAGUNG EINES DATENSTROMS**
METHOD AND DATA CARRIER FOR TRANSMITTING A DATA STREAM
PROCÉDÉ ET SUPPORT DE DONNÉES POUR LA TRANSMISSION D'UN FLUX DE DONNÉES

(30) Priorität: 31.12.2020 AT 603822020
(43) Veröffentlichungstag der Anmeldung: 08.11.2023
(73) Patentinhaber: CUNY-PIERRON, Manfred, 1140 Wien (AT); Hutter, Daniel, 1080 Wien (AT); Weber, Reinhold, 1150 Wien (AT)
(72) Erfinder: CUNY-PIERRON, Manfred, 1140 Wien (AT); Hutter, Daniel, 1080 Wien (AT); Weber, Reinhold, 1150 Wien (AT)
(74) Vertreter: KLIMENT & HENHAPEL
(86) Internationale Anmeldenummer: PCT/EP2021/072367
(87) Internationale Veröffentlichungsnummer: WO 2022/144097

(56) Entgegenhaltungen:
- EP-A1- 3 493 556
- CN-U- 206 993 381

## Beschreibung

Die Erfindung betrifft ein Verfahren zur Übertragung eines Datenstroms zwischen einem mobilen Datenträger und einem Wiedergabegerät für die übertragenen Daten gemäß dem Oberbegriff von Anspruch 1, sowie einen Datenträger mit einem von einem Wiedergabegerät abrufbaren Datenspeicher gemäß dem Oberbegriff von Anspruch 7.

Die Speicherung, der Vertrieb und der Konsum audiovisueller Daten, insbesondere von Medieninhalten wie Musik und dergleichen, haben sich in den letzten Jahren grundlegend verändert. In der CN 206 993 381 U werden etwa NFC-fähige Wiedergabegeräte beschrieben, bei denen Audioinhalte über Bluetooth-Verbindungen übertragen werden. In der EP 3 493 556 A1 wird die Kopplung zweier Hörhilfen miteinander sowie mit einem NFC-fähigen Gerät zur Wiedergabe von Audioinhalten beschrieben. Die Digitalisierung audiovisueller Daten hat die Verwendung von ausschließlich der Speicherung von Medieninhalten dienenden Speichermedien zurückgedrängt. Stattdessen werden Medieninhalte auf externen Servern ("Cloud") oder auf Wiedergabegeräten wie Mobilfunkendgeräten ("Smartphones"), Tablets oder Laptops gespeichert, die nicht ausschließlich der Wiedergabe von Medieninhalten dienen. Neue Bezahlsysteme wurden etabliert, bei denen nicht für physische Datenträger mit audiovisuellen Inhalten gezahlt wird, sondern für die audiovisuellen Daten an sich. Diese Daten sind leicht verfügbar, übertragbar und speicherbar, sodass bei den derzeit üblichen Formen der Speicherung und Verbreitung von audiovisuellen Inhalten der Ersteller der Daten, also etwa der Künstler, keine Kontrolle über die langfristige Verbreitung der Medieninhalte mehr hat. Das hat zur Folge, dass der Ersteller von Medieninhalten außer bei der anfänglichen Veröffentlichung der audiovisuellen Inhalte, bei der eine finanzielle Abgeltung in der Regel möglich ist, keine oder keine angemessene Vergütung für die weitere Nutzung der von ihm geschaffenen Medieninhalte mehr erhält. Die so geschaffenen Medieninhalte dienen vielmehr einer Vielzahl anderer Geschäftsmodelle als vermeintlich frei verfügbarer "content". Der Ersteller von Medieninhalten hat auch keinerlei Möglichkeit mehr zu erfahren, wie oft die von ihm bereitgestellten Medieninhalte geteilt werden und wie oft sie letztendlich tatsächlich gehört oder gesehen wurden.

Zudem hat die zu jeder Zeit an jedem Ort gegebene Verfügbarkeit von audiovisuellen Daten die Wertschätzung für die künstlerische Leistung des Schöpfers von audiovisuellen Inhalten wie Musik und dergleichen und die Bereitschaft zur Abgeltung dieser Leistung im Allgemeinen sinken lassen. Die Loslösung von haptisch erfahrbaren Speichermedien wie Schallplatten, CD oder dergleichen haben dem Konsumenten den Eindruck genommen den audiovisuellen Inhalt "zu besitzen" und daher die Bereitschaft gesenkt dafür auch angemessen zu bezahlen.

Es besteht daher das Ziel der Erfindung darin eine Form der Speicherung und Übertragung von audiovisuellen Daten bereit zu stellen, die dem Ersteller der audiovisuellen Daten eine Kontrolle über die Verbreitung und den Konsum der audiovisuellen Daten ermöglicht.

Dieses Ziel wird jeweils durch die Merkmale der Ansprüche 1 und 7 erreicht. Anspruch 1 bezieht sich auf ein Verfahren zur Übertragung eines Datenstroms zwischen einem mobilen Datenträger und einem Wiedergabegerät für die übertragenen Daten, wobei über einen ersten, mittels eines vom Wiedergabegerät emittierten elektromagnetischen Feldes über elektromagnetische Induktion im mobilen Datenträger zwischen dem Datenträger und dem Wiedergabegerät aufgebauten Übertragungskanal Authentifizierungsdaten zum Aufbau eines zweiten Übertragungskanals vom Datenträger zum Wiedergabegerät übertragen werden, und nach Verifizierung der Authentifizierungsdaten der zweite Übertragungskanal zwischen dem Datenträger und dem Wiedergabegerät aufgebaut wird, über den mittels eines Funksignals von einer Sendeantenne des Datenträgers der Datenstrom vom Datenträger an das Wiedergabegerät übertragen wird. Erfindungsgemäß wird hierbei vorgeschlagen, dass die Stromversorgung der Sendeantenne des zweiten Übertragungskanals über den ersten Übertragungskanal erfolgt, und der zweite Übertragungskanal nur aufrecht erhalten wird, solange der in seiner Aufrechterhaltung vom räumlichen Abstand zwischen dem Datenträger und dem Wiedergabegerät abhängige, erste Übertragungskanal aufrecht ist.

Das erfindungsgemäße Verfahren sieht somit einen mobilen Datenträger vor, der in weiterer Folge noch genauer beschrieben werden wird. Der Abruf der Daten vom mobilen Datenträger bedingt den vorherigen Aufbau eines ersten Übertragungskanals mittels eines vom Wiedergabegerät emittierten elektromagnetischen Feldes über elektromagnetische Induktion im mobilen Datenträger. Mittels elektromagnetischer Induktion kann einerseits eine Übermittlung von kleineren Datenpaketen erfolgen, wie es etwa von passiven Transpondern bekannt ist, und andererseits Strom erregt werden, der zur Stromversorgung elektrischer Komponenten im mobilen Datenträger verwendet werden kann. Der erste Übertragungskanal dient somit der Übertragung von elektrischer Energie und von kleineren Datenpaketen, er kann jedoch aufgrund der quadratischen Abnahme der elektromagnetischen Feldstärke mit der Entfernung vom erregenden Wiedergabegerät nur über geringe räumliche Distanzen aufrecht erhalten werden. Diese Eigenschaft der magnetischen Induktion ist im Rahmen der vorliegenden Erfindung gewünscht, weil sie für den Aufbau des ersten Übertragungskanals eine physische Nähe des mobilen Datenträgers zum Wiedergabegerät erfordert.

Der erste Übertragungskanal eignet sich kaum für die Übermittlung eines kontinuierlichen Datenstromes und ist auch nicht für die Übermittlung von audiovisuellen Daten vorgesehen. Stattdessen werden Authentifizierungsdaten zum Aufbau eines zweiten Übertragungskanals vom Datenträger zum Wiedergabegerät übertragen. Bei diesen Authentifizierungsdaten handelt es sich um vergleichsweise kleine Datenpakete, deren Inhalt noch genauer beschrieben werden wird. Nach Verifizierung der Authentifizierungsdaten wird der zweite Übertragungskanal zwischen dem Datenträger und dem Wiedergabegerät aufgebaut, über den mittels eines Funksignals von einer Sendeantenne des Datenträgers der Datenstrom vom Datenträger an das Wiedergabegerät übertragen wird. Falls keine Verifizierung erfolgen kann, wird der zweite Übertragungskanal nicht aufgebaut und die Übertragung eines Datenstromes unterbleibt.

Die Stromversorgung der Sendeantenne des zweiten Übertragungskanals erfolgt erfindungsgemäß über den ersten Übertragungskanal, wobei der zweite Übertragungskanal nur aufrecht erhalten wird, solange der in seiner Aufrechterhaltung vom räumlichen Abstand zwischen dem Datenträger und dem Wiedergabegerät abhängige, erste Übertragungskanal - über den die für den Betrieb der Sendeantenne erforderliche elektrische Energie übertragen wird - aufrecht ist. Wird mit anderen Worten der mobile Datenträger vom Wiedergabegerät entfernt, erhält die Sendeantenne des zweiten Übertragungskanals keine elektrische Energie für ihren Sendebetrieb und der zweite Übertragungskanal kann den Datenstrom nicht mehr weiter übertragen.

Die Übertragung des Datenstroms erfordert somit eine physische Präsenz des mobilen Datenträgers, der Datenträger muss somit "im Besitz" des Anwenders sein. Die Übertragung des Datenstroms erfolgt aber nur nach einer Verifizierung von Authentifizierungsdaten. Diese Authentifizierungsdaten dienen dem Aufbau des zweiten Übertragungskanals, können aber auch eine Berechtigung zum Abrufen der Daten für einen bestimmten Anwender beinhalten. Eine Möglichkeit besteht etwa darin, dass die Authentifizierungsdaten eine Identifizierungsinformation enthalten, mit der jeder mobile Datenträger versehen ist. Diese Identifizierungsinformation wird von einem Anbieter vergeben und identifiziert den jeweiligen Datenträger eindeutig. Das Wiedergabegerät verfügt über eine Programmbibliothek, die alle vom Anbieter vergebenen Identifizierungsinformationen enthält und bei Erhalt von Authentifizierungsdaten die enthaltene Identifizierungsinformation prüft, ob es sich dabei um eine vom Anbieter vergebene Identifizierungsinformation handelt.

Eine weitere Möglichkeit wird für den Fall vorgeschlagen, dass es sich beim Wiedergabegerät um ein Mobilfunkendgerät handelt. Bei dem Mobilfunkendgerät kann es sich etwa um ein Mobiltelefon ("Smartphone") handeln, oder auch um ein Tablet, einen Laptop, oder um ein sonstiges mit einem Router oder Gateway versehenes Gerät, das Mobilfunkverbindungen aufbauen und nützen kann. Ein solches Mobilfunkendgerät kann mit einer anwenderspezifischen Bediensoftware (beispielsweise als "Application" oder "App") versehen sein, die mit einer entfernten, zentralen Datenverarbeitungseinrichtung, etwa mit einem Server eines Anbieters, eine Datenverbindung aufbaut und Daten austauscht. In diesem Fall wird vorgeschlagen, dass die Authentifizierungsdaten eine Identifizierungsinformation zur Identifizierung des mobilen Datenträgers enthalten und die Verifizierung der Authentifizierungsdaten mithilfe der Identifizierungsinformation erfolgt, wobei es sich bei dem Wiedergabegerät um ein Mobilfunkendgerät mit einer anwenderspezifischen Bediensoftware handelt, die die über den ersten Übertragungskanal übertragene Identifizierungsinformation an eine zentrale Datenverarbeitungseinrichtung sendet, und nach Verifizierung der Identifizierungsinformation durch die zentrale Datenverarbeitungseinrichtung der zweite Übertragungskanal zwischen dem Datenträger und dem Wiedergabegerät aufgebaut wird. Somit erfolgt die Verifizierung der Authentifizierungsdaten nicht lokal im Wiedergabegerät, sondern extern mit Unterstützung einer zentralen Datenverarbeitungseinrichtung. In diesem Fall wäre es sogar denkbar die erfolgreiche Verifizierung der Authentifizierungsdaten mit der erfolgreichen Erkennung eines für einen bestimmten Datenträger autorisierten Wiedergabegeräts zu verknüpfen. Diese Funktionalität kann als Diebstahlsicherung verwendet werden, ermöglicht aber auch eine Protokollierung wie oft und von wem ein bestimmter Medieninhalt abgerufen wird. Diese Information könnte für neuartige Bezahlsysteme herangezogen werden.

Hinsichtlich des ersten Übertragungskanals wird vorgeschlagen, dass es sich bei dem ersten Übertragungskanal um einen NFC (Near Field Communication)-Übertragungskanal handelt. NFC ist ein auf der RFID-Technik basierender internationaler Übertragungsstandard zum kontaktlosen Austausch von Daten zwischen zwei kurzzeitig gepaarten Geräten per elektromagnetischer Induktion über kurze Strecken von wenigen Zentimetern. Mobilfunkendgeräte wie Smartphones und dergleichen sind zunehmend NFC-fähig. Mithilfe des zum Anmeldezeitpunkt aktuellsten WLC ("Wireless Charging Specification")-Standard ist es auch möglich das von NFC genutzte Frequenzband von 13.56 MHz zum Aufladen elektronischer Geräte mit einer gemäß WLC-Spezifikation zum Anmeldezeitpunkt maximalen Leistung von 1 Watt zu verwenden. Somit existieren zum Anmeldezeitpunkt bereits NFC- und WLC-fähige Wiedergabegeräte wie Smartphones und dergleichen, die mittels NFC nicht nur Datenpakete von mobilen Datenträgern auslesen können, sondern mittels WLC auch als Stromquelle zum Aufladen der Stromspeicher elektronischer Geräte dienen. Als "Echtzeit"-Stromquelle für Sendeantennen beispielsweise von "Bluetooth Low Energy (BLE)"-Platinen im Rahmen der BLE-Technologie ohne Zwischenspeicherung in einem internen Stromspeicher wurde WLC aber bislang noch nicht vorgeschlagen. Im Rahmen der vorliegenden Erfindung wird NFC zum Aufbau des ersten Übertragungskanals zum Übertragen der Authentifizierungsdaten sowie zur Übertragung elektrischer Energie vom Wiedergabegerät auf den mobilen Datenträger vorgeschlagen. Eine weitere Möglichkeit zur Übertragung elektrischer Energie besteht zum Anmeldezeitpunkt im Qi-Ladestandard.

Hinsichtlich des zweiten Übertragungskanals wird vorgeschlagen, dass es sich bei dem zweiten Übertragungskanal um einen Bluetooth-, WLAN-oder UWB-Übertragungskanal handelt. In entsprechender Weise wird vorgeschlagen, dass die Authentifizierungsdaten Bluetooth-, WLAN-oder UWB-Authentifizierungsdaten zum Aufbau des zweiten Übertragungskanals enthalten. Eine Möglichkeit besteht etwa in der Verwendung einer "Bluetooth Low Energy (BLE)"-Platine, mit der in einem begrenzten Radius von bis zu 10-100 m mit anderen Geräten Daten ausgetauscht werden können, wobei der Stromverbrauch sehr gering gehalten werden kann. Der Strombedarf der "Bluetooth Low Energy (BLE)"-Platine für den zweiten Übertragungskanal wird dabei mithilfe der über den ersten Übertragungskanal übertragenen elektrischen Energie gedeckt.

Bei dem in weiterer Folge über den zweiten Übertragungskanal übertragenen Datenstrom kann es sich etwa um audiovisuelle Streaming-Daten handeln. Die Übertragung solcher Streaming-Daten wird in herkömmlicher Weise beispielweise mithilfe von HTTP-Streaming vorgenommen, wobei die audiovisuellen Daten in kleine Teilstücke der gesamten Datei geteilt und als Datensegmente übertragen werden. Jedes Segment umfasst eine bestimmte Anzahl von Bits. Ein Teil der Bits bildet die eigentlichen Nutzdaten und ein anderer Teil der Bits bildet einen Datenanfangsblock, der bestimmte Steuerungsinformationen beinhaltet. Diese Steuerungsinformationen werden vom Wiedergabegerät genutzt, um die Datensegmente korrekt zu empfangen und zu verarbeiten. Die hierfür verwendeten Übertragungsprotokolle sind in der Regel TCP (Transmission Control Protocol), UDP (User Datagram Protocol) und IP (Internet Protocol). Im Wiedergabegerät müssen die Segmente in weiterer Folge wieder so zusammengefügt werden, dass eine kontinuierliche Wiedergabe des gesamten Datenstroms ermöglicht wird. Dieser Vorgang verursacht zwar Latenzzeiten von mitunter mehreren Sekunden, die in erster Linie auf den derzeit verwendeten Übertragungsprotokollen wie HLS oder MPEG-DASH und der dabei verwendeten Zwischenpufferung der Daten und das Zusammenfügen der einzelnen Datensegmente zu einem abspielbaren Datenstrom beruhen, stellt aber in der Regel eine erfolgreiche und vollständige Übertragung von audiovisuellen Daten über den zweiten Übertragungskanal sicher.

Die Erfindung betrifft des Weiteren einen Datenträger umfassend einen von einem Wiedergabegerät abrufbaren Datenspeicher, der ein induktives Element zum Aufbau eines ersten Übertragungskanals zum Abrufen von Authentifizierungsdaten des Datenträgers und zum Induzieren eines Stromes mittels eines äußeren elektromagnetischen Feldes aufweist, sowie eine Sendeantenne zum Aufbau eines zweiten Übertragungskanals zur Übertragung eines Datenstroms aus dem Datenspeicher aufweist. Erfindungsgemäß wird vorgeschlagen, dass er als Jeton-förmiger Körper ausgeführt ist, und die Stromversorgung der Sendeantenne vom induktiven Element gebildet wird. Die Ausführung als Jeton-förmiger Körper mit runder, quadratischer oder rechteckförmiger Form und geringer Höhe begünstigt einerseits die nahe Platzierung des Datenträgers am Wiedergabegerät, etwa durch Auflegen auf das Wiedergabegerät, beispielsweise in eine eigens für den Datenträger vorgesehene Aufnahme am Wiedergabegerät, in die der Datenträger eingelegt werden kann, und begünstigt andererseits den erforderlichen Vorgang der elektromagnetischen Induktion für den ersten Übertragungskanal. Zudem fördert die Ausführung als Jeton-förmiger Körper die haptische Wirkung und erinnert den Anwender entfernt an vertraute Speicherformen wie CD oder Minidisk. Für eine mögliche Ausführungsform des Datenträgers wird etwa vorgeschlagen, dass er scheibenförmig mit einem Radius von 1,5-3,5 cm und einer Dicke von 1-5mm ausgeführt ist. Ein solch kompakter Datenträger eignet sich auch für ein Abspielen der Medieninhalte in portablen Geräten wie beispielsweise kabellose Kopfhörer, indem der Datenträger in eine entsprechende Aufnahme des portablen Geräts eingelegt wird.

Hinsichtlich des induktiven Elements wird vorgeschlagen, dass das induktive Element als ein um den Mittelpunkt des Jeton-förmigen Körpers gewundener elektrischer Leiter ausgeführt ist. Auf diese Weise wird der gesamte Querschnitt des Jeton-förmigen Körpers zum Erzielen der elektromagnetischen Induktion ausgenutzt. Insbesondere kann vorgesehen sein, dass das induktive Element als NFC-fähiges Element ausgeführt ist und die Sendeantenne als Bluetooth-, WLAN- oder UWB-fähige Sendeantenne.

Die Erfindung wird in weiterer Folge anhand von Ausführungsbeispielen mithilfe der beiliegenden Figuren näher erläutert. Es zeigen hierbei die
Fig. 1 eine schematische Ansicht einer möglichen Ausführungsform eines mobilen Datenträgers gemäß der Erfindung,
Fig. 2 eine schematische Ansicht des Zusammenwirkens eines erfindungsgemäßen Datenträgers mit einem Wiedergabegerät in Form eines Smartphones für den Verfahrensschritt des Aufbaus des ersten Übertragungskanals,
Fig. 3 eine schematische Ansicht des Zusammenwirkens eines erfindungsgemäßen Datenträgers mit einem Wiedergabegerät in Form eines Smartphones für den Verfahrensschritt des Aufbaus des zweiten Übertragungskanals, und die
Fig. 4 eine schematische Ansicht des Zusammenwirkens eines erfindungsgemäßen Datenträgers mit einem Wiedergabegerät in
Form eines Smartphones für den Verfahrensschritt der Trennung des zweiten Übertragungskanals.

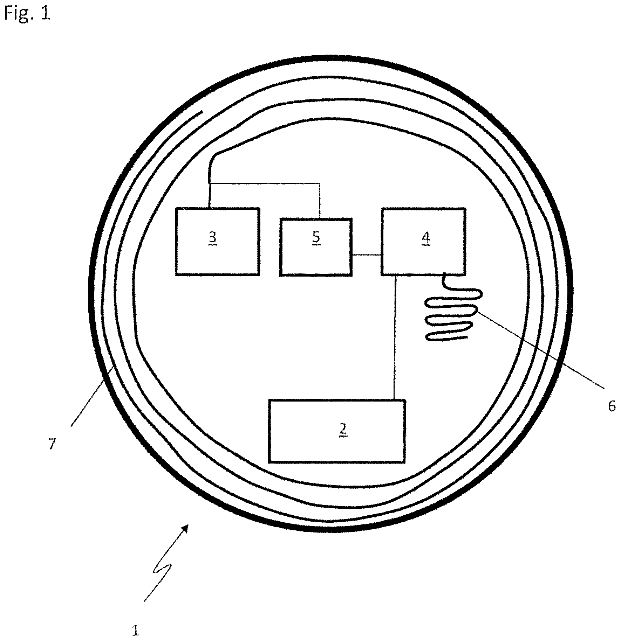

Zunächst wird auf die Fig. 1 Bezug genommen, die eine schematische Ansicht einer möglichen Ausführungsform eines mobilen Datenträgers 1 gemäß der Erfindung zeigt. Der Datenträger 1 ist als Jeton-förmiger Körper in Form eines scheibenförmigen Kunststoffträgers mit einem Radius von 1,5-3,5 cm und einer Dicke von 1-5mm ausgeführt. Im Kunststoffträger sind ein Datenspeicher 2, ein NFC-Chip 3 mit einem als NFC-Antenne ausgeführten induktiven Element 7, ein "Bluetooth Low Energy (BLE)"-Chip 4 mit einer als Bluetooth-Antenne ausgeführten Sendeantenne 6, sowie ein WLC-Chip 5 angeordnet.

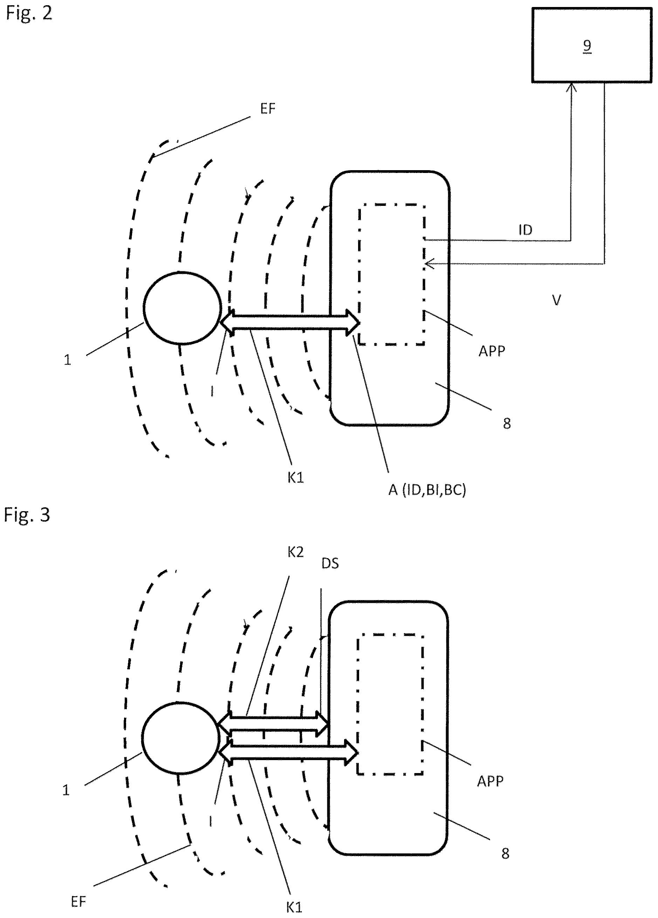

Der Datenspeicher 2 enthält die audiovisuellen Streaming-Daten, die als Datenstrom DS übertragen werden sollen. Der NFC-Chip 3 enthält die Authentifizierungsdaten A, die in weiterer Folge noch näher beschrieben werden, und die über ein mit dem induktiven Element 7 wechselwirkendes elektromagnetisches Feld EF (siehe Fig. 2) abgerufen werden können. Das induktive Element 7 ist hierfür als ein um den Mittelpunkt des Jeton-förmigen Körpers gewundener elektrischer Leiter ausgeführt, der mit dem NFC-Chip 3 sowie mit dem WLC-Chip 5 verbunden ist. Gemeinsam mit dem NFC-Chip 3 stellt das induktive Element 7 ein NFC-fähiges Element dar. Gemeinsam mit dem WLC-Chip 5 stellt das induktive Element 7 ein WLC-fähiges Element dar, das der Erregung eines elektrischen Stromes mithilfe eines von einem Wiedergabegerät 8 erregten elektromagnetischen Feldes und als Stromversorgung für den BLE-Chip 4 dient. Der BLE-Chip 4 ist mit dem Datenspeicher 2 verbunden und sendet bei aufrechter Stromversorgung durch den WLC-Chip 5 über die als Bluetooth-Antenne ausgeführte Sendeantenne 6 den vom Datenspeicher 2 abgerufenen Datenstrom DS.

Die Übertragung des Datenstroms DS ist daher nur dann möglich, wenn sich der Datenträger 1 sehr nahe am Wiedergabegerät 8 befindet und idealerweise auf dem Wiedergabegerät 8 in der Nähe der Emissionsquelle des vom Wiedergabegerät 8 erregten elektromagnetischen Feldes EF aufliegt, auch wenn in den Fig. 2-4 zur besseren Übersichtlichkeit der Datenträger 1 in geringer Entfernung zum Wiedergabegerät 8 eingezeichnet wurde. Die Stromversorgung des BLE-Chip 4 über den WLC-Chip 5 ist nämlich nur bei enger räumlicher Nähe des Datenträgers 1 zu dem als Quelle des elektromagnetischen Feldes EF dienenden Wiedergabegerät 8 möglich, wenn das vom Wiedergabegerät 8 erregte elektromagnetische Feld EF das induktive Element 7 optimal durchsetzt und dadurch die Authentifizierungsdaten A abgerufen werden können und ein elektrischer Strom I(siehe Fig. 3) im induktiven Element 7 erregt werden kann.

Sobald sich der Datenträger 1 sehr nah am Wiedergabegerät 8 befindet, kommt es zur Wechselwirkung zwischen dem vom Wiedergabegerät 8 emittierten elektromagnetischen Feld EF und dem induktiven Element 7. Ein erster Effekt dieser Wechselwirkung besteht in der Übermittlung der Authentifizierungsdaten A (siehe Fig. 2) über einen ersten Übertragungskanal K1 in Form eines NFC-Übertragungskanals. Diese Authentifizierungsdaten A beinhalten eine Identifizierungsinformation ID zur Identifizierung des mobilen Datenträgers 1, einen Befehlscode BC, der das Wiedergabegerät 8 auffordert eine vom Anwender vorinstallierte Bediensoftware APP zu starten, sofern diese Bediensoftware APP nicht ohnehin bereits im Hintergrund auf dem Wiedergabegerät 8 läuft, sowie Bluetooth-Authentifizierungsdaten BI zum Aufbau einer Bluetooth-Verbindung als zweiter Übertragungskanal K2.

Wie in der Fig. 2 angedeutet ist, werden die Authentifizierungsdaten A einer Verifizierung V unterzogen, indem die Identifizierungsinformation ID vom Wiedergabegerät 8 an eine zentrale Datenverarbeitungseinrichtung 9 gesendet wird, in der die Verifizierung V erfolgt. Diese Verifizierung V kann darin bestehen, dass die übermittelte Identifizierungsinformation ID mit den in einer Programmbibliothek vorliegenden Identifizierungsinformationen ID verglichen wird um zu prüfen, ob es sich bei dem Datenträger 1 um einen bekannten und autorisierten Datenträger 1 handelt. Die Verifizierung V kann aber auch darin bestehen zu prüfen, ob eine Autorisierung des Wiedergabegeräts 8 zum Abspielen des Datenstroms DS vorliegt. In der zentralen Datenverarbeitungseinrichtung 9 steht in weiterer Folge die Information zur Verfügung, welcher Datenträger 1 durch welches Wiedergabegerät 8 abgerufen wurde, was für eine weitere Auswertung beispielsweise im Rahmen von Bezahlsystemen wertvoll sein kann. Die Bereitstellung der im Datenspeicher 2 gespeicherten Daten für den zu übermittelnden Datenstrom DS kann über einen ersten Anbieter erfolgen, also beispielsweise ein Künstler, der Musik in Form audiovisueller Daten erstellt. Der Betrieb der zentralen Datenverarbeitungseinrichtung 9 kann durch den ersten Anbieter oder auch einem Betreiber des erfindungsgemäßen Verfahrens erfolgen, wobei der Betreiber des erfindungsgemäßen Verfahrens identisch mit dem ersten Anbieter sein kann, aber nicht sein muss.

Nach der Verifizierung V der Identifizierungsinformation ID durch die zentrale Datenverarbeitungseinrichtung 9 wird der zweite Übertragungskanal K2 zwischen dem Datenträger 1 und dem Wiedergabegerät 8 in Form einer Bluetooth-Verbindung aufgebaut (siehe Fig. 3). Über den ersten Übertragungskanal K1 wird weiterhin elektrische Energie übertragen und ein Strom I im Datenträger 1 induziert, der über den WLC-Chip 5 den BLE-Chip 4 und seine Sendeantenne 6 in Betrieb setzt.

In weiterer Folge werden die audiovisuellen Daten des Datenspeichers 2 als Datenstrom DS in Form von Streaming-Daten an das Wiedergabegerät 8 übertragen und können vom Wiedergabegerät 8 abgespielt werden. An dieser Stelle sei aber erwähnt, dass es sich bei dem Datenstrom DS auch um nichtaudiovisuelle Daten in Form von Dokumenten und dergleichen handeln könnte.

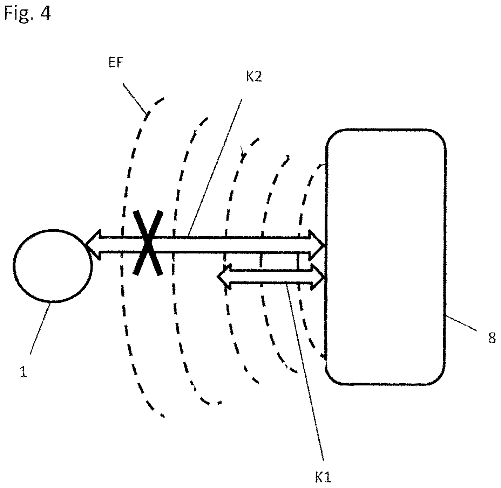

Sobald der Datenträger 1 vom Wiedergabegerät 8 entfernt wird, kommt die elektromagnetische Induktion im Datenträger 1 zum Erliegen und der BLE-Chip 4 und seine Sendeantenne 6 werden nicht mehr mit Strom I versorgt. Dadurch bricht der zweite Übertragungskanal K2 zusammen, was in der Fig. 4 durch den gekreuzten Übertragungskanal K2 angedeutet ist. Daher kann auch der Datenstrom DS nicht mehr an das Wiedergabegerät 8 übertragen werden.

Die Erfindung stellt somit eine Form der Speicherung und Übertragung von audiovisuellen Daten bereit, die dem Ersteller der audiovisuellen Daten eine Kontrolle über die Verbreitung und den Konsum der audiovisuellen Daten ermöglicht, indem es ihm nicht nur möglich ist durch einen anfänglichen Verkauf des Datenträgers 1, der grundsätzlich auch personalisiert möglich wäre, Aufschluss über Verbreitung und Inhaberschaft von Medieninhalten zu erlangen, sondern auch Informationen über die weitere Verbreitung und die Häufigkeit der Mediennutzung zu erhalten. Des Weiteren ist es auch möglich durch Schaffung einer eigenen Infrastruktur in Form des Datenträger 1, der autonomen Bediensoftware APP und der zentralen Datenverarbeitungseinrichtung 9 wieder Unabhängigkeit von derzeit vorherrschenden Vertriebssystemen zu erlangen, die dem Künstler und Ersteller der Medieninhalte kaum mehr Kontrolle über Vertrieb und Verwertung der Medieninhalte ermöglichen.

## Patentansprüche

1. Verfahren zur Übertragung eines Datenstroms (DS) zwischen einem mobilen Datenträger (1) und einem Wiedergabegerät (8) für die übertragenen Daten, wobei über einen ersten, mittels eines vom Wiedergabegerät (8) emittierten elektromagnetischen Feldes (EF) über elektromagnetische Induktion im mobilen Datenträger (1) zwischen dem Datenträger (1) und dem Wiedergabegerät (8) aufgebauten Übertragungskanal (K1) Authentifizierungsdaten (A) zum Aufbau eines zweiten Übertragungskanals (K2) vom Datenträger (1) zum Wiedergabegerät (8) übertragen werden, und nach Verifizierung (V) der Authentifizierungsdaten (A) der zweite Übertragungskanal (K2) zwischen dem Datenträger (1) und dem Wiedergabegerät (8) aufgebaut wird, über den mittels eines Funksignals von einer Sendeantenne (6) des Datenträgers (1) der Datenstrom (DS) vom Datenträger (1) an das Wiedergabegerät (8) übertragen wird, **dadurch gekennzeichnet, dass** die Stromversorgung der Sendeantenne (6) des zweiten Übertragungskanals (K2) über den ersten Übertragungskanal (K1) erfolgt, und der zweite Übertragungskanal (K2) nur aufrecht erhalten wird, solange der in seiner Aufrechterhaltung vom räumlichen Abstand zwischen dem Datenträger (1) und dem Wiedergabegerät (8) abhängige, erste Übertragungskanal (K1) aufrecht ist.

2. Verfahren nach Anspruch 1, **dadurch gekennzeichnet, dass** die Authentifizierungsdaten (A) eine Identifizierungsinformation (ID) zur Identifizierung des mobilen Datenträgers (1) enthalten und die Verifizierung (V) der Authentifizierungsdaten (A) mithilfe der Identifizierungsinformation (ID) erfolgt, wobei es sich bei dem Wiedergabegerät (8) um ein Mobilfunkendgerät mit einer anwenderspezifischen Bediensoftware (APP) handelt, die die über den ersten Übertragungskanal (K1) übertragene Identifizierungsinformation (ID) an eine zentrale Datenverarbeitungseinrichtung (9) sendet, und nach Verifizierung (V) der Identifizierungsinformation (ID) durch die zentrale Datenverarbeitungseinrichtung (9) der zweite Übertragungskanal (K2) zwischen dem Datenträger (1) und dem Wiedergabegerät (8) aufgebaut wird.

3. Verfahren nach Anspruch 1 oder 2, **dadurch gekennzeichnet, dass** es sich bei dem ersten Übertragungskanal (K1) um einen NFC (Near Field Communication)-Übertragungskanal handelt.

4. Verfahren nach einem der Ansprüche 1 bis 3, **dadurch gekennzeichnet, dass** es sich bei dem zweiten Übertragungskanal (K2) um einen Bluetooth-, WLAN-oder UWB-Übertragungskanal handelt.

5. Verfahren nach Anspruch 4, **dadurch gekennzeichnet, dass** die Authentifizierungsdaten (A) Bluetooth-, WLAN-oder UWB-Authentifizierungsdaten (BI) zum Aufbau des zweiten Übertragungskanals (K2) enthalten.

6. Verfahren nach einem der Ansprüche 1 bis 5, **dadurch gekennzeichnet, dass** es sich bei dem über den zweiten Übertragungskanal (K2) übertragenen Datenstrom (DS) um audiovisuelle Streaming-Daten handelt.

7. Datenträger (1) umfassend einen von einem Wiedergabegerät (8) abrufbaren Datenspeicher (2), der ein induktives Element (7) zum Aufbau eines ersten Übertragungskanals (K1) zum Abrufen von Authentifizierungsdaten (A) des Datenträgers (1) und zum Induzieren eines Stromes (I) mittels eines äußeren elektromagnetischen Feldes (EF) aufweist, sowie eine Sendeantenne (6) zum Aufbau eines zweiten Übertragungskanals (K2) zur Übertragung eines Datenstroms (DS) aus dem Datenspeicher (2) aufweist, **dadurch gekennzeichnet, dass** er als Jeton-förmiger Körper ausgeführt ist, und die Stromversorgung der Sendeantenne (6) vom induktiven Element (7) gebildet wird.

8. Datenträger (1) nach Anspruch 7, **dadurch gekennzeichnet, dass** er scheibenförmig mit einem Radius von 1,5-3,5 cm und einer Dicke von 1-5mm ausgeführt ist.

9. Datenträger (1) nach Anspruch 7 oder 8, **dadurch gekennzeichnet, dass** das induktive Element (7) als ein um den Mittelpunkt des Jeton-förmigen Körpers gewundener elektrischer Leiter ausgeführt ist.

10. Datenträger nach einem der Ansprüche 7 bis 9, **dadurch gekennzeichnet, dass** das induktive Element (7) als NFC-fähiges Element ausgeführt ist und die Sendeantenne (6) als Bluetooth-, WLAN- oder UWB-fähige Sendeantenne (6).

## Claims

1. Method for transmitting a data stream (DS) between a mobile data carrier (1) and a playback device (8) for the transmitted data, wherein authentication data (A) for setting up a second transmission channel (K2) from the data carrier (1) to the playback device (8) is transmitted via a first transmission channel (K1) which is set up between the data carrier (1) and the playback device (8) by means of an electromagnetic field (EF) emitted by the playback device (8) via electromagnetic induction in the mobile data carrier (1), and following verification (V) of the authentication data (A), the second transmission channel (K2) is set up between the data carrier (1) and the playback device (8), via which channel the data stream (DS) is transmitted from the data carrier (1) to the playback device (8) by means of a radio signal from a transmitting antenna (6) of the data carrier (1), **characterized in that** the power supply to the transmitting antenna (6) of the second transmission channel (K2) is provided via the first transmission channel (K1), and the second transmission channel (K2) is maintained only as long as the first transmission channel (K1), whose maintenance depends on the spatial distance between the data carrier (1) and the playback device (8), is maintained.

2. Method according to claim 1, **characterized in that** the authentication data (A) contains identification information (ID) for identifying the mobile data carrier (1), and the verification (V) of the authentication data (A) is carried out with the aid of the identification information (ID), wherein the playback device (8) is a mobile terminal having a mobile application (APP) which sends the identification information (ID) transmitted via the first transmission channel (K1) to a central data processing device (9), and following verification (V) of the identification information (ID) by the central data processing device (9), the second transmission channel (K2) is set up between the data carrier (1) and the playback device (8).

3. Method according to claim 1 or 2, **characterized in that** the first transmission channel (K1) is an NFC (Near Field Communication) transmission channel.

4. Method according to one of claims 1 to 3, **characterized in that** the second transmission channel (K2) is a Bluetooth, WLAN or UWB transmission channel.

5. Method according to claim 4, **characterized in that** the authentication data (A) contains Bluetooth, WLAN or UWB authentication data (BI) for setting up the second transmission channel (K2).

6. Method according to one of claims 1 to 5, **characterized in that** the data stream (DS) transmitted via the second transmission channel (K2) is audio-visual streaming data.

7. Data carrier (1) having a data memory (2) retrievable by a playback device (8) and comprising an inductive element (7) for setting up a first transmission channel (K1) for retrieving authentication data (A) of the data carrier (1) and for inducing a current (I) by means of an external electromagnetic field (EF), and a transmitting antenna (6) for establishing a second transmission channel (K2) transmitting a data stream (DS) from the data memory (2), **characterized in that** it is designed as a token-shaped body, and the power supply of the transmitting antenna (6) is formed by the inductive element (7).

8. Data carrier (1) according to claim 7, **characterized in that** it is disk-shaped with a radius of 1.5-3.5 cm and a thickness of 1-5 mm.

9. Data carrier (1) according to claim 7 or 8, **characterized in that** the inductive element (7) is designed as an electrical conductor wound around the center of the token-shaped body.

10. Data carrier according to one of claims 7 to 9, **characterized in that** the inductive element (7) is designed as an NFC-enabled element and the transmitting antenna (6) is designed as a Bluetooth-, WLAN- or UWB-enabled transmitting antenna (6).

## Revendications

1. Procédé de transmission d'un flux de données (DS) entre un support de données mobile (1) et un dispositif de lecture (8) pour les données transmises, dans lequel, par l'intermédiaire d'un premier canal de transmission (K1) établi au moyen d'un champ électromagnétique (EF) émis depuis le dispositif de lecture (8) par induction électromagnétique dans le support de données mobile (1) entre le support de données (1) et le dispositif de lecture (8), des données d'authentification (A) sont transmises pour établir un deuxième canal de transmission (K2) depuis le support de données (1) au dispositif de lecture (8), et après vérification (V) des données d'authentification (A), le deuxième canal de transmission (K2) est établi entre le support de données (1) et le dispositif de lecture (8), par l'intermédiaire duquel le flux de données (DS) est transmis depuis le support de données (1) au dispositif de lecture (8) au moyen d'un signal radio provenant d'une antenne d'émission (6) du support de données (1), **caractérisé en ce que** l'alimentation en courant de l'antenne d'émission (6) du deuxième canal de transmission (K2) s'effectue par l'intermédiaire du premier canal de transmission (K1) et le deuxième canal de transmission (K2) n'est maintenu que tant que le premier canal de transmission (K1), dont le maintien dépend de la distance spatiale entre le support de données (1) et le dispositif de lecture (8), est maintenu.

2. Procédé selon la revendication 1, **caractérisé en ce que** les données d'authentification (A) contiennent une information d'identification (ID) pour l'identification du support de données mobile (1) et la vérification (V) des données d'authentification (A) s'effectue à l'aide de l'information d'identification (ID), le dispositif de lecture (8) étant un terminal mobile avec un logiciel de commande (APP) spécifique à l'utilisateur, qui envoie l'information d'identification (ID) transmise par l'intermédiaire du premier canal de transmission (K1) à un dispositif central de traitement de données (9), et après vérification (V) de l'information d'identification (ID) par le dispositif central de traitement de données (9), le deuxième canal de transmission (K2) est établi entre le support de données (1) et le dispositif de lecture (8).

3. Procédé selon la revendication 1 ou 2, **caractérisé en ce que** le premier canal de transmission (K1) est un canal de transmission NFC (Near Field Communication).

4. Procédé selon l'une des revendications 1 à 3, **caractérisé en ce que** le deuxième canal de transmission (K2) est un canal de transmission Bluetooth, WLAN ou UWB.

5. Procédé selon la revendication 4, **caractérisé en ce que** les données d'authentification (A) contiennent des données d'authentification Bluetooth, WLAN ou UWB (BI) pour établir le deuxième canal de transmission (K2).

6. Procédé selon l'une des revendications 1 à 5, **caractérisé en ce que** le flux de données (DS) transmis par l'intermédiaire du deuxième canal de transmission (K2) est un flux de données audiovisuelles en continu.

7. Support de données (1) comprenant une mémoire de données (2) appelable depuis un dispositif de lecture (8), laquelle mémoire de données présentant un élément inductif (7) pour établir un premier canal de transmission (K1) pour appeler des données d'authentification (A) du support de données (1) et pour induire un courant (1) au moyen d'un champ électromagnétique extérieur (EF), ainsi qu'une antenne d'émission (6) pour établir un deuxième canal de transmission (K2) pour transmettre un flux de données (DS) à partir de la mémoire de données (2), **caractérisé en ce qu'**il est réalisé en tant qu'un corps en forme de jeton et **en ce que** l'alimentation en courant de l'antenne d'émission (6) est formée par l'élément inductif (7).

8. Support de données (1) selon la revendication 7, **caractérisé en ce qu'**il est réalisé en forme de disque avec un rayon de 1,5-3,5 cm et une épaisseur de 1-5 mm.

9. Support de données (1) selon la revendication 7 ou 8, **caractérisé en ce que** l'élément inductif (7) est réalisé en tant qu'un conducteur électrique enroulé autour du centre du corps en forme de jeton.

10. Support de données selon l'une des revendications 7 à 9, **caractérisé en ce que** l'élément inductif (7) est réalisé en tant qu'élément compatible NFC et l'antenne d'émission (6) en tant qu'antenne d'émission (6) compatible Bluetooth, WLAN ou UWB.
